# EUROPEAN PATENT SPECIFICATION

(11) **EP 3 502 457 B1**
(45) Date of publication and mention of the grant of the patent: **09.06.2021**
(21) Application number: 16920314.8
(22) Date of filing: 25.10.2016
(51) Int. Cl.: F02M 21/02, F02M 35/16, F16K 17/16

(54) **SHIP HAVING A GAS PIPING SYSTEM INSTALLED THEREIN**
SCHIFF MIT GASROHRLEITUNGSSYSTEM-INSTALLATION
NAVIRE AVEC UN SYSTÈME DE TUYAUTERIE DE GAZ

(43) Date of publication of application: 26.06.2019
(73) Proprietor: Imabari Shipbuilding Co., Ltd., Ehime 799-2195 (JP)
(72) Inventor: HIGAKI, Yukito, Imabari-shi Ehime 799-2195 (JP); TAKEMA, Shoichi, Marugame-shi Kagawa 7638511 (JP); NAKATANI, Taichi, Marugame-shi Kagawa 7638511 (JP)
(74) Representative: Vos, Derk
(86) International application number: PCT/JP2016/081581
(87) International publication number: WO 2018/078720

(56) References cited:
- EP-A1- 2 589 787
- WO-A1-2015/040267
- WO-A1-2015/104735
- DE-A1-102016 001 343
- JP-A- S57 206 759
- JP-A- S62 251 461
- JP-A- 2001 182 622
- JP-A- 2011 001 934
- JP-A- 2012 082 796
- JP-A- 2015 221 645
- US-A1- 2014 283 788

## Description

### Technical Field

The present invention relates to a gas piping system of a marine vessel, and particularly relates to a gas piping system of a marine vessel in which a diesel engine is mounted as a main engine or an auxiliary engine.

### Background Art

Marine vessels in which a diesel engine is mounted as a main engine or an auxiliary engines are conventionally known (see, for example, PTL 1 to PTL 3). In such a marine vessel, liquefied gas fuel stored in a fuel tank mounted in the marine vessel is pressurized and supplied in a vaporized state to the diesel engines.

Generally, many pipes for inflammable materials, such as heavy oil, lubricating oil, and high-pressure oil; many devices (e.g., pumps); and many storage tanks are placed in an engine room in which a main engine and an auxiliary engines of a marine vessel are arranged. There are also many electric wires, many high-temperature exhaust gas pipes, or many combustion devices, such as boilers and incinerators, all of which can be ignition sources. Therefore, when gas is drawn into the engine room of the marine vessel, a structure that prevents gas leakage into the engine room is required, in order to prevent explosion and fire caused by gas, according to the applied regulations. In order to satisfy this requirement, manufacturers producing diesel engines used as main engines and auxiliary engines generally adopt double-pipe structures in the diesel engine internal pipe, the pipe for supplying the gas fuel to the diesel engine, and the pipe for discharging vent gas from the diesel engine. Manufacturers further recommend double-pipe structures in pipes that form the flow path of the gas fuel and vent gas in the engine room, and that communicate with the pipes of the diesel engine. Vent gas refers to gas generated during the discharge of the gas fuel remaining in the diesel engine and the pipes when gas operation of the diesel engine is stopped. The same applies to the entire present specification.

DE 10 2016 001343 A1 discloses a fuel gas supply system for an internal combustion engine comprising at least one fuel gas pump located outside of a liquefied gas storage tank, wherein the fuel gas pump is connected with the liquefied gas in the storage tank via a tank outlet line. A heat exchange circuit comprises a compressor, and after that, a first heat exchanger that is connected to the fuel gas supply line between the fuel gas pump and a final heat exchanger, and an expansion device and a second heat exchanger.

EP 2 589 787 A1 discloses a double-walled fuel supply pipe element configured to be used in a fuel supply pipe system of an internal combustion engine. The double-walled fuel supply element may have an inner pipe and an outer pipe defining a leakage detection space there between, the leakage detection space being connected to the outside of double-walled fuel supply pipe element via a pipe element leakage detection opening formed in one of the end faces of the double-walled fuel supply pipe element.

JP S62 251461 A discloses a gas leak protection device for a high pressure fuel gas pipe in a high pressure injection type binary fuel internal combustion engine. The high pressure fuel gas pipe is covered with a sealing pipe. The space between the fuel pipe and the sealing pipe is filled with an inert gas at a predetermined pressure. A safety valve is provided at the outboard end part of the sealing pipe and configured for opening the sealing pipe to the atmosphere in case the pressure in the sealing pipe exceeds the predetermined pressure in case of a gas leak of the fuel pipe.

### Citation List

### Patent Literature

PTL 1: JP2016-61141A
PTL 2: JP2016-37935A
PTL 3: JP2015-127510A

### Summary of Invention

### Technical Problem

Gas fuel supplied to a diesel engine, particularly one that is used as a main engine, is highly pressurized (e.g., 30 MPa); thus, vibration and swing (rolling and pitching) of the ship, very small cracks in pipes due to aged deterioration, deterioration of the packing of pipe joints, etc., may cause the risk of gas explosion and fire due to the jetting of the high-pressure gas fuel. Therefore, in order to safely and stably supply gas fuel to the diesel engine, it is necessary to provide monitoring systems, such as pressure and temperature measuring sensors and gas concentration detection sensors.

Marine vessels are generally operated for about 20 to 30 years, or even longer (e.g., about 40 years), and it is thus necessary to inspect these devices (monitoring systems). However, if pipes for supplying gas fuel and discharging vent gas are designed to have a double-pipe structure, these devices are assumed to be provided in the inside of the outer pipe of the double pipe. A person cannot enter the inside for direct inspection, due to the size of the double pipe. This has caused problems in that these devices could only be inspected by remote visual checking using a fiber scope or the like, such that reliable inspection was not available. Moreover, if the pipes are designed to have a double-pipe structure, it is necessary to hold the inner pipe, through which the gas fuel flows, using a spring, as a measure against the swing and vibration of the inner pipe. However, attachment of such a spring made the inspection of the devices using a fiber scope or the like more difficult, thus causing problems in that safe and reliable inspection was not available.

The present invention was made to solve the above problems. The present invention provides a gas piping system in which even if pipes for supplying gas fuel and discharging vent gas are damaged, leakage of the gas fuel and the vent gas into the engine room can be reliably prevented, and the pipes, and monitoring systems or the like for monitoring gas leakage, etc., attached to the pipes can be easily and reliably inspected, adjusted, and exchanged over a long period of time. The present invention also provides a marine vessel comprising the gas piping system.

### Solution to Problem

The present invention relates to a gas piping system for supplying gas fuel to a diesel engine that is mounted as a main engine or an auxiliary engine in a marine vessel, the diesel engine comprising a supply pipe having a double-pipe structure comprising a supply inner pipe and a supply outer pipe, and a vent pipe having a double-pipe structure comprising a vent inner pipe and a vent outer pipe. The gas piping system comprises a supply pipeline for sending the gas fuel from a fuel tank storing the gas fuel to the supply inner pipe of the diesel engine, a vent pipeline for discharging vent gas from the vent inner pipe of the diesel engine to the outside of the engine room of the marine vessel, a first duct covering the supply pipeline in the engine room, and a second duct covering the vent pipeline in the engine room. The supply outer pipe and the vent outer pipe extend to the inside of the first duct or the second duct, and the end of the supply outer pipe is provided with a rupture disk in the first duct or the second duct.

In the gas piping system of the present invention, the supply pipeline for sending the gas fuel from the fuel tank to the diesel engine, and the vent pipeline for sending vent gas from the diesel engine to the outside of the engine room are covered with the first duct and the second duct, respectively, in the engine room of the marine vessel in which leakage of the gas fuel is not allowed. Because the supply pipeline and the vent pipeline through which the gas fuel and the vent gas flow, respectively, are thus covered with the first duct and the second duct, even if the supply pipeline and the vent pipeline are damaged, the gas leaked from the supply pipeline and the vent pipeline remains in the first duct and the second duct, and leakage of the gas fuel and the vent gas into the engine room can be prevented.

Moreover, because the supply pipeline and the vent pipeline are covered with the first duct and the second duct, respectively, a person can enter the inside of the first duct and the second duct, which are each configured to have a wide space. Further, the supply pipeline and the vent pipeline, monitoring systems for monitoring leakage, etc., of the gas fuel and the vent gas attached to the supply pipeline and the vent pipeline, and control valves for controlling the gas flow in each pipe, can be easily inspected and maintained.

Furthermore, the supply pipe and the vent pipe, each of which has a double-pipe structure, extend from the diesel engine, and the end of the supply outer pipe of the supply pipe is provided with a rupture disk in the first duct or the second duct. Thus, even if the inside of the inner pipe of the diesel engine internal pipe, the inside of the supply inner pipe of the supply pipe, or the inside of the vent inner pipe of the vent pipe is damaged to cause leakage of the gas fuel, the leakage gas that has instantaneously become highly pressurized in the outer pipe of the diesel engine internal pipe, the supply outer pipe of the supply pipe, or the vent outer pipe of the vent pipe can rupture the rupture disk and escape into the first duct or the second duct. As a result, even if the double-pipe structure is damaged, the leakage gas is discharged into the first duct or the second duct, and leakage of the gas fuel into the engine room can be prevented. The leakage gas refers to the gas fuel and the vent gas leaked from the supply pipeline and the vent pipeline, respectively. The same applies to the entire present specification.

In the gas piping system according to a preferable embodiment, the supply outer pipe communicates with an exhaust pipe between the rupture disk and the diesel engine, and an outer pipe exhaust fan for allowing gas in the supply outer pipe to flow is attached to the one end of the exhaust pipe.

Because of such a structure, the leakage gas filled in the outer pipe of the diesel engine internal pipe, the supply outer pipe, and the vent outer pipe due to damage to the double pipe structure can be discharged by the outer pipe exhaust fan through the exhaust pipe. Thus, even if the gas fuel is leaked, the leakage gas can be quickly released in a section outside of the engine room in which gas release does not cause any problems.

Moreover, in the gas piping system according to a preferable embodiment, the first duct and the second duct communicate with each other through a communication hole at one end of each duct, one of the first duct and the second duct has a duct vent hole communicating with the outside of the marine vessel at the other end of the duct, and the other one of the first duct and the second duct comprises a duct exhaust fan for allowing gas in the first duct and the second duct to flow at the other end of the duct.

Because of such a structure, leakage gas leaked into the first duct and the second duct due to damage to the supply pipeline and the vent pipeline can be discharged by the duct exhaust fan. Thus, even if the gas fuel and the vent gas are leaked, the leakage gas can be quickly released in a section outside of the engine room in which gas release does not cause any problems.

Furthermore, the marine vessel of the present invention comprises the gas piping system described above.

### Advantageous Effects of Invention

According to the present invention, even if pipes for supplying gas fuel and discharging vent gas are damaged, leakage of the gas fuel and the vent gas into the engine room can be reliably prevented. Further, the pipes, and monitoring systems or the like for monitoring gas leakage, etc., attached to the pipes can be easily and reliably inspected, adjusted, and exchanged over a long period of time.

### Brief Description of Drawings

Fig. 1 is a schematic view showing one embodiment of the marine vessel of the present invention.
Fig. 2 is a schematic view showing one embodiment of the gas piping system of the present invention.
Fig. 3 is a cross-sectional view of the first duct and second duct of Fig. 2.

### Description of Embodiments

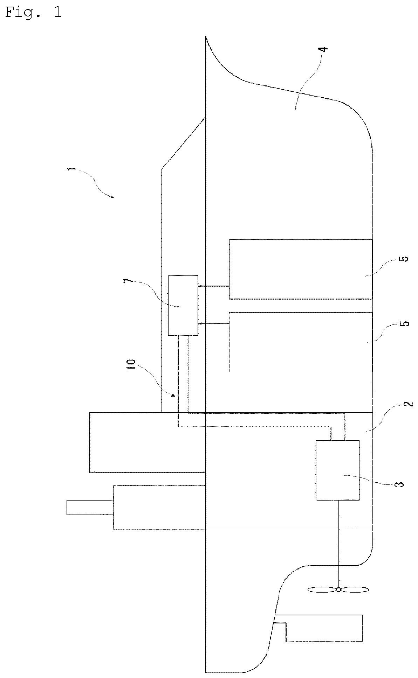

One embodiment of the marine vessel and the gas piping system of the present invention is described below with reference to Figs. 1 to 3.

The marine vessel 1 of the present invention comprises, in an engine room 2, a diesel engine 3 as a main engine for propulsion or as an auxiliary engine used as an electric generator or the like. The marine vessel 1 also comprises, in a hull 4 outside the engine room 2, a fuel tank 5 for storing gas fuel in a liquefied state to be supplied to the diesel engine 3. Further, the marine vessel 1 comprises the gas piping system 10 of the present invention for sending the gas fuel from the fuel tank 5 to the diesel engine 3, and for sending vent gas from the diesel engine 3 to the outside of the engine room 2. The fuel tank 5 comprises a cargo tank containing cargo liquefied gas fuel, and a driving fuel tank for driving the diesel engine 3, separately from the cargo tank. The marine vessel 1 is not necessarily provided with both the cargo tank and the driving fuel tank; at least one of these tanks may be provided.

As the liquefied gas fuel stored in the fuel tank 5, for example, liquefied natural gas can be used. The liquefied gas fuel is pressurized by a gas fuel supplying device 7, such as a pump or compressor, provided in the hull 4, and sent in a vaporized state to the diesel engine 3 through the gas piping system 10. As the gas fuel supplying device 7, any known pump or compressor that can pressurize the gas fuel to a pressure required by the diesel engine 3 can be used.

As the diesel engine 3, any known diesel engine used in marine vessels can be used. Because leakage of the gas fuel is not allowed in the engine room 2, the internal pipe of the diesel engine 3 basically has a double-pipe structure comprising an inner pipe and an outer pipe. Moreover, a supply pipe 31 for supplying the gas fuel to the diesel engine 3 and a vent pipe 32 for discharging vent gas from the diesel engine 3, both of which communicate with the internal pipe of the diesel engine 3 and extend to the outside of the diesel engine 3, also have a double-pipe structure. Specifically, the supply pipe 31 comprises a supply inner pipe 311 and a supply outer pipe 312, and the vent pipe 32 comprises a vent inner pipe 321 and a vent outer pipe 322. Both ends of the inner pipe of the internal pipe of the diesel engine 3 communicate with the respective supply inner pipe 311 and vent inner pipe 321. Both ends of the outer pipe of the internal pipe of the diesel engine 3 communicate with the respective supply outer pipe 312 and vent outer pipe 322. Hereinafter, the inner pipe of the internal pipe of the diesel engine 3, the supply inner pipe 311, and the vent inner pipe 321 are collectively called the "engine inner pipes"; and the outer pipe of the internal pipe of the diesel engine 3, the supply outer pipe 312, and the vent outer pipe 322 are collectively called the "engine outer pipes."

The diesel engine 3 used in the present embodiment is a heavy oil/gas (LNG)-fueled two cycle diesel engine. The heavy oil/gas (LNG)-fueled two cycle diesel engine is a dual-fuel diesel engine that can use both heavy fuel oil and gas fuel, particularly liquefied natural gas (LNG). The heavy oil/gas-fueled two cycle diesel engine can be used in operation using only heavy oil as fuel, operation using only gas as fuel, and operation using both heavy oil and gas as fuel. Therefore, the diesel engine 3 is provided with a system for supplying heavy oil (not shown); however, the following explains only the system 10 (gas piping system) for supplying gas.

The gas piping system 10 comprises a supply pipeline 21 for sending gas fuel from the fuel tank 5 storing the gas fuel to the diesel engine 3, and a vent pipeline 22 for sending vent gas from the diesel engine 3 to the outside of the engine room 2. The supply pipeline 21 is provided so that the fuel tank 5 and the supply inner pipe 311 of the diesel engine 3 communicate with each other. The vent pipeline 22 is provided extending from the vent inner pipe 321 of the diesel engine 3 to the outside of the engine room 2. In the outside of the engine room 2 of the marine vessel 1, a vent mast (not shown) is provided. The vent mast has an opening for releasing the gas in a section in which gas release does not cause any problems. The vent pipeline 22 extending to the outside of the engine room 2 extends to the vent mast in the outside of the engine room 2. Because the gas fuel sent to the diesel engine 3 is pressurized to a pressure required by the diesel engine 3, the supply pipeline 21 and the vent pipeline 22 are pressure-resistant so that they are not damaged even if the gas fuel pressurized to a pressure required by the diesel engine 3 flows thereinto.

Further, the gas piping system 10 comprises a first duct 26 covering the supply pipeline 21 and a second duct 27 covering the vent pipeline 22 in the engine room 2 of the marine vessel 1. The first duct 26 and the second duct 27 have a shape that is not damaged even by leakage of the gas fuel and the vent gas from the supply pipeline 21 and the vent pipeline 22, respectively; that is, they have a size in which the internal pressure does not increase even by leakage of the gas fuel and the vent gas. In addition, the first duct 26 and the second duct 27 have a size that allows a person to enter for inspection. The first duct 26 and the second duct 27 can have any shape, as long as it satisfies the above requirements. The first duct 26 and the second duct 27 are formed of highly pressure-resistant materials, such as steel plates, so that they are not damaged by leakage of the gas fuel and the vent gas.

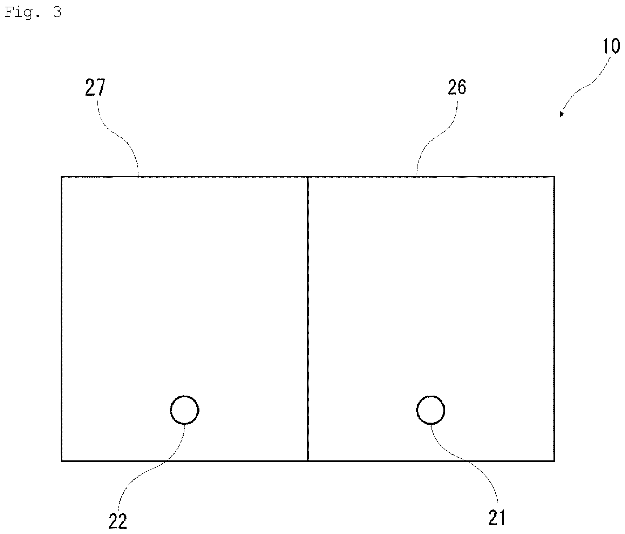

In the present embodiment, the first duct 26 and the second duct 27 have a rectangular cross section, as shown in Fig. 3. It is preferable that the first duct 26 and the second duct 27 each have a cross-sectional area of 800 mm x 1200 mm or more. Moreover, in order to ensure pressure resistance, it is preferable that the plate thickness of each surface constituting the first duct 26 and the second duct 27 be 10 mm or more.

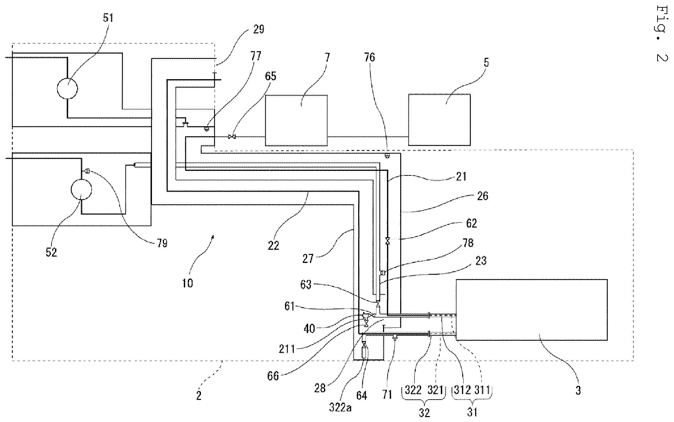

As shown in Fig. 2, the first duct 26 and the second duct 27 communicate with each other through a communication hole 28 at one end of each duct. The other end of the second duct 27 is provided with a duct vent hole 29 communicating with the outside of the engine room 2. The other end of the first duct 26 is provided with a duct exhaust fan 51 that allows the gas in the first duct 26 and the second duct 27 to flow. As the duct exhaust fan 51, any known blower(fan) can be used, as long as it allows the gas in the first duct 26 and the second duct 27 to flow. The duct exhaust fan 51 used in the present embodiment is a blower that absorbs the gas in the first duct 26 and the second duct 27 to thereby allow the gas in the first duct 26 and the second duct 27 to flow. It is preferable that the duct exhaust fan 51 have the ability to keep the inside of the first duct 26 and the second duct 27 at a negative pressure of, for example, 25 Pa or more. Thus, even if the gas fuel and the vent gas are leaked in the first duct 26 and the second duct 27, respectively, leakage of the gas fuel and the vent gas into the engine room 2 can be prevented.

The ends of the supply outer pipe 312 and the vent outer pipe 322 of the diesel engine 3 extend to the inside of the second duct 27 directly or through extension pipes. When extension pipes intervene, the end of the supply outer pipe 312 and the end of the vent outer pipe 322 indicate to the ends of the respective extension pipes. That is, when extension pipes intervene, the pipes including the respective extension pipes are called the supply outer pipe 312 and the vent outer pipe 322.

The end of the supply outer pipe 312 is provided with a rupture disk 40 in the second duct 27. It is preferable that the rupture disk 40 be ruptured at about 0.5 MPa so that the internal pressure of the engine outer pipes does not overly increase during leakage of the gas fuel. The rupture disk 40 is provided with a burst sensor (not shown) that detects rupture of the rupture disk 40. As the rupture disk 40 and the burst sensor, any known rupture disk and sensor can be used.

The supply outer pipe 312 communicates with an exhaust pipe 23 between the rupture disk 40 and the diesel engine 3. The one end of the exhaust pipe 23 is provided with an outer pipe exhaust fan 52 that allows the gas in the engine outer pipes to flow. As the outer pipe exhaust fan 52, any known blower (fan) can be used, as long as it allows the gas in the engine outer pipes to flow. The outer pipe exhaust fan 52 used in the present embodiment is a blower that absorbs the gas in the engine outer pipes to thereby allow the gas in the engine outer pipes to flow. It is preferable that the outer pipe exhaust fan 52 have the ability to keep the inside of the engine outer pipes at a negative pressure of, for example, 25 Pa or more. Thus, even if the gas fuel is leaked in the engine outer pipes, leakage of the leakage gas into the engine room 2 can be prevented.

The supply outer pipe 312 is provided with a valve 61 between the rupture disk 40 and the exhaust pipe 23. The supply pipeline 21, the exhaust pipe 23, and the vent outer pipe 322 are provided with a valve 62, a valve 63, and a valve 64, respectively. The supply pipeline 21 is also provided with a main gas valve 65 in the outside of the engine room 2. Further, the supply outer pipe 312 communicates with a branch pipe 211 between the rupture disk 40 and the valve 61. The one end of the branch pipe 211 is provided with a valve 66. As the valves 61 to 66, any known valves that can switch opening and closing automatically or remotely can be used.

The vent outer pipe 322 is provided with, between the diesel engine 3 and the valve 64, a air-tightness test connecting port 71 through which air can be supplied into the vent outer pipe 322.

The inside of the first duct 26 is provided with gas concentration detection sensors 76 and 77 that detect leakage of the gas fuel and the vent gas. Further, the exhaust pipe 23 is provided with gas concentration detection sensors 78 and 79 that can detect whether the gas fuel and the vent gas are flowing in the pipe. One of the gas concentration detection sensors 78 and 79 attached to the exhaust pipe 23 is provided in the first duct 26, and the other one is provided between the outer pipe exhaust fan 52 and a position in which the gas is released into the atmosphere.

Next, the flow of the gas fuel and the vent gas in the gas piping system 10, and the flow of the leakage gas when the gas fuel is leaked. Normally, the gas fuel is supplied to the diesel engine 3 with the valves 61 to 65 opened and the valve 66 closed.

The liquefied gas fuel stored in the fuel tank 5 is pressurized in the gas fuel supplying device 7, and sent in a vaporized state to the supply pipeline 21. The gas fuel is sent to the supply inner pipe 311 through the supply pipeline 21, and used to drive the diesel engine 3. When the gas operation of the diesel engine 3 is stopped, the gas fuel remaining in the diesel engine 3 and the supply pipeline 21 is discharged as vent gas to the outside of the engine room 2 through the vent inner pipe 321 and the vent pipe 32. The vent gas discharged to the outside of the engine room 2 is flowed to the vent mast through the vent pipe 32, and released into the atmosphere from the vent mast.

In the inside of the first duct 26 and the second duct 27, the duct exhaust fan 51 is driven to suck the gas in the first duct 26 and the second duct 27. As a result, the inside of the first duct 26 and the second duct 27 becomes a negative pressure, so that air outside of the vessel is taken into the second duct 27 from the duct vent holes 29. The air introduced into the second duct 27 flows to the first duct 26 through the communication hole 28, is sucked by the duct exhaust fan 51, and is discharged into the atmosphere in a safe place where there is no risk of gas explosion. Thus, the inside of the first duct 26 and the second duct 27 is always forcibly ventilated.

In the engine outer pipes, which have a double-pipe structure, the outer pipe exhaust fan 52 is driven to suck the gas in the engine outer pipes. As a result, the inside of the engine outer pipes becomes a negative pressure, so that air is taken into the vent outer pipe 322 from an open end 322a of the vent outer pipe 322. The air taken into the vent outer pipe 322 flows sequentially to the outer pipe of the internal pipe of the diesel engine 3, the supply outer pipe 312, and the exhaust pipe 23. The air is then sucked by the outer pipe exhaust fan 52, and is discharged into the atmosphere in a safe place where there is no risk of gas explosion. Thus, the inside of the engine outer pipes is always forcibly ventilated.

If the gas fuel and the vent gas are leaked from the supply pipeline 21 or the vent pipeline 22, the leakage gas spreads in the first duct 26 or the second duct 27. Since the gas can flow due to the duct exhaust fan 51 in the first duct 26 and the second duct 27, the leakage gas is sucked by the duct exhaust fan 51 and discharged into the atmosphere. This prevents the leakage gas from flowing into the engine room 2 and causing explosion or fire upon contact with high-temperature parts or ignition sources in the engine room 2.

If the gas fuel is leaked from the supply pipeline 21, or if the vent gas is leaked from the vent pipeline 22, the leakage gas is detected by the gas concentration detection sensors 76 and 77, which are provided in the first duct 26. If the leakage gas is detected, the main gas valve 65 and the valve 62 are automatically closed to block supply of the gas fuel from the fuel tank 5, which is the supply source of the gas fuel.

If the gas fuel is leaked from the engine inner pipes, the rupture disk 40 is ruptured by shock waves and pressure waves generated due to the adiabatic expansion of the gas fuel. When the rupture disk 40 is ruptured, a burst sensor detects the rupture of the rupture disk 40, and the main gas valve 65 and the valve 62 are automatically closed to block supply of the gas fuel. In contrast, the gas fuel leaked in the engine outer pipes is discharged into the second duct 27 from an opening formed by the rupture of the rupture disk 40. Since the gas can flow in the second duct 27 due to the duct exhaust fan 51, the leakage gas discharged into the second duct 27 is sucked by the duct exhaust fan 51 through the first duct 26, and discharged into the atmosphere. This prevents the leakage gas from flowing into the engine room 2 and causing an explosion or fire upon contact with high-temperature parts or ignition sources in the engine room 2.

When the leakage gas leaked in the engine outer pipes is discharged to some extent into the second duct 27, the valve 61 is closed by remote control. Since the gas can flow due to the outer pipe exhaust fan 52 in the engine outer pipes, the leakage gas that does not flow into the second duct 27 and remains in the engine outer pipes is sucked by the outer pipe exhaust fan 52 and discharged into the atmosphere. This prevents the leakage gas from flowing into the engine room 2 and causing an explosion or fire upon contact with high-temperature parts or ignition sources in the engine room 2.

If the gas fuel is leaked from the engine inner pipes to an extent in which the rupture disk 40 is not ruptured, the gas flows in the engine outer pipes and the exhaust pipe 23, which communicates with the engine outer pipes; therefore, the leakage gas is detected by the gas concentration detection sensors 78 and 79 provided in the exhaust pipe 23. If the leakage gas is detected, the main gas valve 65 and the valve 62 are automatically closed to block supply of the gas fuel from the fuel tank 5, which is the supply source of the gas fuel. Then, the gas leaked in the engine outer pipes is discharged into the atmosphere by the outer pipe exhaust fan 52, as described above.

Because of the handling of dangerous high-pressure gas, it is necessary to regularly inspect whether leakage does not occur in the internal pipe of the diesel engine 3, and the supply pipe 31 and the vent pipe 32 extending from the diesel engine 3. This inspection is conducted in such a manner that the valve 61, valve 63, and valve 64 are closed, and compressed air is charged from the air tightness test connecting port 71 provided in the vent outer pipe 322. Slight leakage may occur even though the valve 61 is closed; in that case, the valve 66 is opened so as to prevent the rupture of the rupture disk 40.

As described above, in the gas piping system 10 of the present embodiment, the supply pipeline 21 for sending the gas fuel from the fuel tank 5 to the diesel engine 3, and the vent pipeline 22 for sending the vent gas from the diesel engine 3 to the outside of the engine room 2 are covered with the first duct 26 and the second duct 27, respectively, in the engine room 2 of the marine vessel 1, in which leakage of the gas fuel is not allowed. Because the supply pipeline 21, through which the gas fuel passes, and the vent pipeline 22, through which the vent gas passes, are thus covered with the first duct 26 and the second duct 27, respectively, even if the supply pipeline 21 and the vent pipeline 22 are damaged, the gas leaked from the supply pipeline 21 and the vent pipeline 22 remains in the first duct 26 and the second duct 27, and the leakage of the gas fuel and the vent gas into the engine room 2 can be prevented.

Moreover, because the supply pipeline 21 and the vent pipeline 22 are covered with the first duct 26 and the second duct 27, respectively, a person can enter the first duct 26 and the second duct 27, which are each configured to have a wide space. This facilitates inspection and maintenance of the supply pipeline 21 and the vent pipeline 22, monitoring systems for monitoring leakage of the gas fuel and the vent gas attached to the supply pipeline 21 and the vent pipeline 22, control valves for controlling the gas flow of each pipe, and the like.

Furthermore, the supply pipe 31 and the vent pipe 32, each of which has a double-pipe structure, extend from the diesel engine 3, and the end of the supply outer pipe 312 of the supply pipe 31 is provided with a rupture disk 40 in the second duct 27. Thus, even if the engine inner pipes are damaged, the leakage gas that has instantaneously become highly pressurized in the engine outer pipes can rupture the rupture disk 40 and flow into the second duct 27. As a result, even if part of the double-pipe structure is damaged, the leakage gas is discharged into the second duct 27, and leakage of the gas fuel into the engine room 2 can be prevented.

When the pipes for supplying the gas fuel and discharging the vent gas are each configured as a double pipe, for example, if the gas fuel is supplied at 30 MPa, the design pressure of the outer pipe of the double pipe is calculated to be 18.1 MPa, in consideration of rupture by shock waves during supposed gas leakage. That is, a pressure resistance that can withstand 18.1 MPa is also required for monitoring systems, such as pressure and temperature measuring sensors and gas concentration detection sensors, attached to the inner pipe of the double pipe, as well as for pipe accessories, such as pressure switches, flow meters, and valves. However, it is practically difficult to configure the monitoring systems and pipe accessories to have high pressure resistance. When the supply pipeline 21 and the vent pipeline 22 are configured to be covered by the first duct 26 and the second duct 27, respectively, as in the present embodiment, the gas fuel and vent gas leaked from the supply pipeline 21 or the vent pipeline 22 spread in the first duct 26 or the second duct 27, both of which have a broad area, and thus do not increase the pressure. Accordingly, high pressure resistance is not required for the monitoring systems and pipe accessories, thereby making it easy to obtain the monitoring systems and pipe accessories.

Moreover, because the outer pipe exhaust fan 52 is provided to allow the gas in the engine outer pipes to flow, the gas fuel filling the engine outer pipes due to damage to the double pipe structure can be discharged by the outer pipe exhaust fan 52 through the exhaust pipe 23. Thus, even if the gas fuel is leaked, the leakage gas can be quickly discarged. Furthermore, because the duct exhaust fan 51 is provided to allow the gas in the first duct 26 and the second duct 27 to flow, the gas fuel and the vent gas leaked in the first duct 26 and the second duct 27 due to damage to the supply pipeline 21 and the vent pipeline 22 can be discharged by the duct exhaust fan 51. Thus, even if the gas fuel and the vent gas are leaked, the leakage gas can be quickly discharged.

One embodiment of the present invention is described above. However, the present invention is not limited to this embodiment, and various modifications may be made as long as they do not depart from the scope of the claims.

For example, in the embodiment described above, the vent gas discharged from the diesel engine 3 is discharged from the vent mast into the atmosphere in a section outside of the marine vessel in which gas release does not cause any problems; however, for example, a gas recovery tank (not shown) may be provided in the hull 4, the vent pipe 32 may be branched from the pipe leading to the vent mast to provide a pipe extending to the gas recovery tank, and the vent gas may be recovered as gas fuel in the gas recovery tank.

In the embodiment described above, the duct vent hole 29 is formed at the other end of the second duct 27, and the duct exhaust fan 51 is provided at the other end of the first duct 26; however, the duct exhaust fan 51 may be provided at the other end of the second duct 27, and the duct vent hole 29 may be formed at the other end of the first duct 26. That is, the duct vent hole 29 may be provided at the other end of one of the first duct 26 and the second duct 27, and the duct exhaust fan 51 may be provided at the other end of the other one of the first duct 26 and the second duct 27.

In the embodiment described above, the ends of the supply outer pipe 312 and the vent outer pipe 322 extend into the second duct 27; however, for example, they may extend into the first duct 26. Alternatively, one end of each of the supply outer pipe 312 and the vent outer pipe 322 may extend into the first duct 26, and the other end may extend into the second duct 27. In either case, the ends of the supply outer pipe 312 and the vent outer pipe 322 are positioned in the inside of the first duct 26 or the second duct 27. In this case, the rupture disk 40 may be provided in the first duct 26, as long as the end of the supply outer pipe 312 is positioned in the first duct 26.

### Reference Signs List

- 1.: Marine vessel
- 2.: Engine room
- 3.: Diesel engine
- 5.: Fuel tank
- 10.: Gas piping system
- 21.: Supply pipeline
- 22.: Vent pipeline
- 23.: Exhaust pipe
- 26.: First duct
- 27.: Second duct
- 28.: Communication hole
- 29.: Duct vent hole
- 31.: Supply pipe
- 311.: Supply inner pipe
- 312.: Supply outer pipe
- 32.: Vent pipe
- 321.: Vent inner pipe
- 322.: Vent outer pipe
- 40.: Rupture disk
- 51.: Duct exhaust fan
- 52.: Outer pipe exhaust fan

## Claims

1. A marine vessel (1) comprising a diesel engine (3) and a gas piping system (10) for supplying gas fuel to the diesel engine (3) that is mounted as a main engine or an auxiliary engine in the marine vessel (1),
the diesel engine comprising
a supply pipe (31) having a double-pipe structure comprising a supply inner pipe (311) and a supply outer pipe (312), and
a vent pipe having (32) a double-pipe structure comprising a vent inner pipe (321) and a vent outer pipe (322);
the gas piping system comprising:
a supply pipeline (21) for sending the gas fuel from a fuel tank (5) storing the gas fuel to the supply inner pipe (311) of the diesel engine (3),
a vent pipeline (22) for sending vent gas from the vent inner pipe (321) of the diesel engine (3) to the outside of an engine room (2) of the marine vessel (1);
a first duct (26) covering the supply pipeline (21) in the engine room (2), and
a second duct (27) covering the vent pipeline (22) in the engine room (2);
the supply outer pipe (312) and the vent outer pipe (322) extending to the inside of the first duct (26) or the second duct (27); **characterized in that**
the end of the supply outer pipe (312) is provided with a rupture disk (40) in the first duct (26) or the second duct (27).

2. The marine vessel (1) according to claim 1, wherein the supply outer pipe (312) communicates with an exhaust pipe (23) between the rupture disk (40) and the diesel engine (3); and
an outer pipe exhaust fan (52) for allowing gas in the supply outer pipe (312) to flow is attached to the one end of the exhaust pipe (23).

3. The marine vessel (1) according to claim 1 or 2, wherein the first duct (26) and the second duct (27) communicate with each other through a communication hole (28) at one end of each duct;
one of the first duct (26) and the second duct (27) has a duct vent hole (29) communicating with the outside of the marine vessel (1) at the other end of the duct; and
the other one of the first duct (26) and the second duct (27) comprises a duct exhaust fan (51) for allowing gas in the first duct (26) and the second duct (27) to flow at the other end of the duct.

## Patentansprüche

1. Ein Schiff (1) aufweisend einen Dieselmotor (3) und ein Gasleitungssystem (10) zum Zuführen von gasförmigem Kraftstoff zu dem Dieselmotor (3), welcher als Hauptmotor oder als Hilfsmotor in dem Schiff (1) angebracht ist,
wobei der Dieselmotor aufweist
ein Versorgungsrohr (31) mit einer Doppelrohrstruktur, das ein Versorgungsinnenrohr (311) und ein Versorgungsaußenrohr (312) aufweist, und
ein Entlüftungsrohr (32) mit einer Doppelrohrstruktur, das ein Entlüftungsinnenrohr (321) und ein Entlüftungsaußenrohr (322) aufweist;
wobei das Gasleitungssystem aufweist:
eine Versorgungsrohrleitung (21) zum Leiten des gasförmigen Kraftstoffs von einem Kraftstofftank (5), der den gasförmigen Kraftstoff speichert, zu dem Versorgungsinnenrohr (311) des Dieselmotors (3),
eine Entlüftungsrohrleitung (22) zum Leiten von Entlüftungsgas von dem Entlüftungsinnenrohr (321) des Dieselmotors (3) zur Außenseite eines Maschinenraums (2) des Schiffes (1);
einen ersten Schacht (26), der die Versorgungsrohrleitung (21) im Maschinenraum (2) abdeckt, und
einen zweiten Schacht (27), der die Entlüftungsrohrleitung (22) im Maschinenraum (2) abdeckt;
wobei das Versorgungsaußenrohr (312) und das Entlüftungsaußenrohr (322) sich zur Innenseite des ersten Schachts (26) oder des zweiten Schachts (27) erstrecken;
dadurch charakterisiert, dass das Ende des Versorgungsaußenrohrs (312) mit einer Berstscheibe (40) in dem ersten Schacht (26) oder dem zweiten Schacht (27) versehen ist.

2. Das Schiff (1) gemäß Anspruch 1, wobei das Versorgungsaußenrohr (312) mit einem Abzugsrohr (23) zwischen der Berstscheibe (40) und dem Dieselmotor (3) in Verbindung steht; und
ein Außenrohrabzugsgebläse (52) an dem einen Ende des Abzugsrohrs (23) angebracht ist, um Gas im Versorgungsaußenrohr (312) strömen zu lassen.

3. Das Schiff (1) gemäß Anspruch 1 oder 2, wobei der erste Schacht (26) und der zweite Schacht (27) durch eine Verbindungsöffnung (28) an einem Ende jedes Schachts miteinander in Verbindung stehen;
einer von dem ersten Schacht (26) und dem zweiten Schacht (27) eine Schachtentlüftungsöffnung (29) aufweist, die am anderen Ende des Schachts mit der Außenseite des Schiffes (1) in Verbindung steht; und
der andere des ersten Schachts (26) und des zweiten Schachts (27) ein Schachtabzugsgebläse (51) am anderen Ende des Schachts aufweist, um Gas in dem ersten Schacht (26) und dem zweiten Schacht (27) strömen zu lassen.

## Revendications

1. Navire (1) comprenant un moteur diesel (3) et un système de tuyauterie de gaz (10) pour fournir un combustible gazeux au moteur diesel (3) qui est monté comme un moteur principal ou un moteur auxiliaire dans le navire (1),
le moteur diesel comprenant
un tuyau d'alimentation (31) ayant une structure à deux tuyaux comprenant un tuyau d'alimentation interne (311) et un tuyau d'alimentation externe (312), et
un tuyau d'évent (32) ayant une structure à deux tuyaux comprenant un tuyau d'évent interne (321) et un tuyau d'évent externe (322) ;
le système de tuyauterie de gaz comprenant :
une canalisation d'alimentation (21) pour envoyer le combustible gazeux d'un réservoir de combustible (5) stockant le combustible gazeux au tuyau d'alimentation interne (311) du moteur diesel (3),
une canalisation d'évent (22) pour envoyer le gaz d'évent du tuyau d'évent interne (321) du moteur diesel (3) à l'extérieur d'une salle des machines (2) du navire (1) ;
un premier conduit (26) recouvrant la canalisation d'alimentation (21) dans la salle des machines (2), et
un second conduit (27) recouvrant la canalisation d'évent (22) dans la salle des machines (2) ;
le tuyau d'alimentation externe (312) et le tuyau d'évent externe (322) s'étendant vers l'intérieur du premier conduit (26) ou du second conduit (27) ; **caractérisé en ce que**
l'extrémité du tuyau d'alimentation externe (312) est pourvue d'un disque de rupture (40) dans le premier conduit (26) ou le second conduit (27).

2. Navire (1) selon la revendication 1, dans lequel le tuyau d'alimentation externe (312) communique avec un tuyau d'échappement (23) entre le disque de rupture (40) et le moteur diesel (3) ; et
un ventilateur d'échappement de tuyau externe (52) pour permettre au gaz dans le tuyau d'alimentation externe (312) de s'écouler est fixé à une extrémité du tuyau d'échappement (23).

3. Navire (1) selon la revendication 1 ou 2, dans lequel le premier conduit (26) et le second conduit (27) communiquent l'un avec l'autre par un orifice de communication (28) à une extrémité de chaque conduit ;
un conduit parmi le premier conduit (26) et le second conduit (27) a un orifice d'évent de conduit (29) communiquant avec l'extérieur du navire (1) à l'autre extrémité du conduit ; et
l'autre conduit parmi le premier conduit (26) et le second conduit (27) comprend un ventilateur d'échappement de conduit (51) pour permettre au gaz dans le premier conduit (26) et le second conduit (27) de s'écouler à l'autre extrémité du conduit.
